# EUROPÄISCHE PATENTSCHRIFT

(11) **EP 3 772 598 B1**
(45) Veröffentlichungstag und Bekanntmachung des Hinweises auf die Patenterteilung: **16.03.2022**
(21) Anmeldenummer: 20000276.4
(22) Anmeldetag: 03.08.2020
(51) Int. Cl.: F16C 13/06, F16C 19/50, F16C 19/54, F16C 19/56, F16C 23/08, F16C 33/34, F16C 19/49

(54) **METALLKÄFIG ZUR AUFNAHME VON WÄLZKÖRPERN IN EINEM WÄLZLAGER**
METAL CAGE FOR HOLDING ROLLING BODIES IN A ROLLING BEARING
CAGE MÉTALLIQUE DESTINÉE AU LOGEMENT DES CORPS ROULANTS DANS UN ROULEMENT

(30) Priorität: 05.08.2019 DE 102019005695
(43) Veröffentlichungstag der Anmeldung: 10.02.2021
(73) Patentinhaber: Fromm, Gunnar, 01159 Dresden (DE)
(72) Erfinder: Fromm, Johannes, 02829 Neisseaue (DE)
(74) Vertreter: Hennings, Martin

(56) Entgegenhaltungen:
- CN-A- 101 280 809
- DE-A1-102011 015 921
- US-A- 384 023

## Beschreibung

Die Erfindung betrifft einen Metallkäfig zur Aufnahme von Wälzkörpern in einem Wälzlager.

Für Wälzlager ist allgemein kennzeichnend, dass eine Vielzahl von Ausführungsformen für eine Vielzahl von Anwendungs- und Einsatzmöglichkeiten zur Verfügung steht. Dabei kann in den meisten Fällen davon ausgegangen werden, dass die einzelnen Lösungen zumeist einen Außenring und einen Innenring aufweisen, zwischen denen in einem Käfig abrollbar angeordnete Wälzkörper aufgenommen sind, wie beispielsweise in der DE 1 575 480 C oder in der DE 10 2004 049 968 A1 beschrieben. Da aber solche Lager im Rahmen bestimmter Anwendungsfälle nur begrenzt oder nicht einsetzbar sind, wurden Wälzlager mit so genannten Bolzenkäfigen und bevorzugt zylinderrollenähnlichen Wälzkörpern entwickelt und vorgestellt.

So wird beispielsweise in der DE 100 31 427 C2 ein Käfig für ein Wälzlager beschrieben, bei welchem der Bolzen des Wälzkörpers ein Gewinde aufweist, welches mit dem Gewinde der einen Käfigscheibe zusammenwirkt, während das andere Ende der Bolzen jeweils in Durchgangsbohrungen der anderen Käfigscheibe bzw. von in diese eingelassene Hülsen aufgenommen und festgelegt ist. Obwohl hier die versprochene Realisierung einer guten Fixierung der Bolzen in den Käfigscheiben bei hohen Lagerbelastungen realisierbar erscheint, sind solche Wälzlager im Herstellungsprozess sehr kostenintensiv, was ursächlich ist für eine nur sehr zögerliche Praxiseinführung und - anwendung.

Insbesondere diesem Nachteil soll mit den Lösungen, wie beispielhaft in der DE 10 2006 047 544 A1 oder in der DE 10 2007 049 119 A1 vorgestellt, begegnet werden. Dabei versuchen beide Lösungen mittels zusätzlich zwischen den Käfigseitenscheiben und mit diesen verbundenen Querstegen sowohl die Führung der Wälzkörper zu verbessern als auch die Fertigung solcher Lager zu vereinfachen. Da aber in diese Richtung gehende Probleme vorrangig bei so genannten Großwälzlagern auftreten und zu lösen sind, ist die spezielle Ausrichtung der Konzipierung solcher Lager für bestimmte Anwendungskonzepte erkennbar, was andererseits, auch unter dem Aspekt des hohen Eigengewichts des Wälzlagers, nur in diesen Fällen akzeptabel erscheint.

Die US 5,249,872 offenbart eine Lageranordnung mit Wälzelementen, wobei Belastungsmittel zum Belasten der Wälzelemente radial auf einen der inneren und äußeren Lagerlaufringe hin innerhalb des Lagerträgers vorgesehen sind, um einen Berührungsbereich zwischen den Wälzelementen und dem Lagerlaufring zu vergrößern. Gemäß der WO 2008/071150 A2 wird im Rahmen der Herstellung eines Bolzenkäfigs für ein Zylinderrollenlager, wenigstens einen zur Lagerachse koaxialen Käfigring aufweisend, an welchem mehrere in Umfangsrichtung gleichmäßig verteilte, zur Lagerachse parallele Lagerbolzen zur drehbaren Lagerung der Zylinderrollen angeordnet sind, wobei der Käfigring mit Bohrungen zur Aufnahme und Befestigung jeweils eines Endes eines zugeordneten Lagerbolzens versehen ist, vorgeschlagen, die Enden der Lagerbolzen mit dem Käfigring mittels eines Widerstandsnietvorganges oder mittels eines Widerstandschweißverfahrens fest zu verbinden. Solche Lösungen können zumeist trotz einer in der Praxis gezeigten relativ hohen Störungsresistenz das Versprechen niedriger Fertigungskosten nicht einhalten.

Außerdem ist diese, wie auch allen anderen bekannten Lösungen, in keinem Fall dazu geeignet, im Rahmen bestimmter Einstell- und/oder Lastbereiche, wie beispielsweise im Rahmen bestimmter Grenzen von einem Durchmesserminimum bis zu einem Durchmessermaximum, und/oder innerhalb vorhandener Drehsysteme eingesetzt zu werden, wofür in der Praxis regelmäßig der Einsatz spezieller und teurer Einzellösungen erforderlich ist. Letztlich weisen auch alle bekannten Lösungen ein relativ hohes Eigengewicht auf, was zwar in der Praxis akzeptiert wird, aber sich zumeist nachteilig auswirkt.

Die US 31 31 818 A offenbart einen Kran mit drehbaren Grundstrukturen und betrifft insbesondere Einheiten dieses Typs, bei denen die Basisdrehung durch einen Rollenbahnmechanismus erhalten wird. Die US 49 26 493 A offenbart ein Lagersystem für Hochgeschwindigkeitsspindeln von Werkzeugmaschinen, insbesondere Schleifmaschinen, umfasst mindestens ein vorderes Lager, das nahe am Spindelflansch angeordnet ist, und ein hinteres Lager, das jeweils drei Stützrollen aufweist, die gleichwinklig auf die Spindel wirken und einen größeren Durchmesser haben als letztere. Um bei Drehzahlen bis 150.000 U / min ein spielfreies Lagersystem zu erhalten, das die Präzisionsanforderungen an Präzisionswerkzeugmaschinen erfüllt, werden die Stützrollen fixiert und mit beidseitig vorgesehenen Rollenzapfen in Präzisionskugellagern mit kleinem Durchmesser montiert Gehäuse, das die Spindel und die Stützrollen aufnimmt. Die Spindel hat als Lagerflächen konische Abschnitte, die gegeneinander geneigt sind und zu denen die Achse der Stützrollen parallel ist. Zum Vorspannen oder Vorspannen sind mindestens die Stützrollen eines Lagers axial parallel zur Spindel verstellbar. Die US 66 44 859 B2 betrifft einen Stützrollensatz für einen kippbaren, axial beweglichen und drehbaren Träger für eine rotierende Trommel, die in Rotation angetrieben werden kann. Es besteht aus zwei Stützrollen, die symmetrisch auf beiden Seiten einer vertikalen Längsmittelebene der Drehtrommel liegen und jeweils in zwei Drehlagern montiert sind, die auf einer Grundplatte befestigt sind, die kippbar auf einem statischen Fundament gelagert ist. Um mit einfacher Betätigung jeder Stützrolle eine optimale Selbsteinstellung zu erreichen, wird jede Grundplatte über zwei Gelenklager gelagert, die in einem Querabstand voneinander auf dem Fundament angeordnet sind, aus dem das innere Gelenklager besteht in Form eines Kugellagers, während das äußere Gelenklager ein bewegliches Lager bildet und auf dem Fundament so gelagert ist, dass es um den Mittelpunkt der Kugel des inneren Gelenklagers verschiebbar. Die DE 42 07 034 C2 beschreibt eine Drehlagerung für in Tauchbädern mit schmelzflüssigen Metallen rotierende band- oder drahtförmiges Behandlungsgut umlenkende Führungsrollen. Die DE 202 08 073 U1 offenbart eine Drehlagerung eines Rotationskörpers, d.h. eine Anordnung umfassend einen Stützkörper, den Rotationskörper und eine Mehrzahl von Tragrollen, über die der Rotationskörper an dem Stützkörper durch Wälzkontakt drehbar abgestützt wird. Das Radialrollenlager gemäß US 53 16 394 A hat einen Außenring, einen Innenring, mehrere Rollenelemente und einen Käfig. Der Käfig wird an den Kanten des Außenrings über mehrere Stützrollen geführt, die beispielsweise in Form von Kugellagern über den Umfang verteilt sind. Dies ermöglicht es, Gleitreibung zum Führen des Käfigs zu vermeiden und den Käfig ohne Spiel zu führen, so dass das Rollenlager eine hohe Grenzgeschwindigkeit erreichen kann. Die DE 10 2011 015 921 A betrifft einen Metallkäfig mit den Merkmalen des Oberbegriffs des Anspruchs 1 zur Aufnahme von a Wälzkörpern in einem Wälzlager, aufweisend zwei parallel nebeneinander und koaxial zur Lagerachse angeordnete scheibenförmige Käfigseitenelemente, zwischen denen auf mit beiden Käfigseitenelementen in Wirkverbindung stehenden Drehachsen geführte Wälzkörper in Umlaufrichtung regelmäßig voneinander beabstandet aufgenommen und die Käfigseitenelemente mit Durchdringungen zur Aufnahme des Endbereiches der jeweiligen Drehachse versehen sind.

Vor diesem Hintergrund liegt der Erfindung die Aufgabe zu Grunde, einen Metallkäfig zur Aufnahme von Wälzkörpern in einem Wälzlager zur Verfügung zu stellen, der die oben genannten Nachteile nicht oder nur in einem geringen Maß aufweist und insbesondere mit einfachen technischen Mitteln ein Wälzlager zur Verfügung stellt, welches, bei einem relativ niedrigen Eigengewicht, bei einer hoher Funktionalität und vertretbaren Fertigungskosten, den Einsatz auch im Rahmen bestimmter Einstell-und/oder Lastbereiche und/oder innerhalb bereits vorhandener Drehsysteme ermöglicht.

Die vorliegende Erfindung löst diese Aufgabe, ausgehend von einem Metallkäfig zur Aufnahme von Wälzkörpern in einem Wälzlager durch die im Anspruch 1 angegebenen Merkmale.

Es hat sich gezeigt, dass insbesondere durch die mit den Außenflächen der Käfigseitenelemente verbundenen und parallel zur Lagerachse einstellbar ausgebildeten Aufnahmelager für die Drehachsen optimale Bedingungen hinsichtlich der Einsatzvariabilität des Wälzlagers geschaffen sind, da dieses auf Grund der geschaffenen Möglichkeit, den Abstand der Wälzkörper zur Lagerachse jeweils innerhalb eines bestimmten Bereiches einstellen zu können, im Rahmen bestimmter Durchmesserbereiche der Drehkörper eingesetzt werden kann, was sich in der Praxis vorrangig im Zusammenhang mit dem Bedienen auch rasterunüblicher Drehkörperdurchmesser und in Hinblick auf eine Minimierung der Vorratshaltung bestimmter Wälzlagersortimente positiv auswirkt.

Dabei können die Aufnahmelager grundsätzlich beliebig gestaltet sein. So wäre es bei einer besonders einfach gestalteten Variante möglich, die Endbereiche der die Käfigseitenelemente beidseitig durchdringenden Drehachsen der Wälzkörper jeweils außen in kamm- oder rasterförmig ausgebildeten einstellbaren Gleitlagern aufzunehmen. Nach einer bevorzugten Variante des erfindungsgemäßen Metallkäfigs ist jeder Endbereich der Drehachsen der Wälzkörper von einem außerhalb an den Käfigseitenelementen einstellbar festgelegten Trägerelement aufgenommen. Vorliegend sollte in diesem Fall dabei jede Durchdringung für die Drehachsen der Wälzkörper schlitz- oder langlochartig ausgebildet werden, wodurch mit einfachen technischen Mitteln die zuvor erwähnte Einstellbarkeit der die Drehachsen aufnehmenden Aufnahmelager ermöglicht wird. Dabei sollten, unter dem Aspekt auch einer möglichst einfachen Ausgestaltung der erfindungsgemäßen Lösung, die Wirkrichtungen aller schlitz- oder langlochartigen Durchdringungen für die Drehachsen der Wälzkörper derart ausgerichtet sein, dass deren parallele Einstellbarkeit zur Lagerachse sicher gewährleistet werden kann.

Mit dem Ziel, eine hohe Funktionalität und Störungsresistenz der einstellbaren Aufnahmelager zu realisieren, sollte jedes Trägerelement, welches nach einer bevorzugten Variante der Erfindung bolzenförmig ausgebildet sein sollte, einerseits eine Ausnehmung zur Aufnahme des Endbereiches einer Drehachse und andererseits einen Gewindeteil aufweisen. Wird aber, aus welchen Gründen auch immer, in diesem Bereich auf zumindest einen Teil dieser dargestellten Vorteile verzichtet und werden Abstriche zumindest hinsichtlich der Funktionalität des Systems hingenommen, dann wäre auch eine andere Ausbildung der Trägerelemente der Aufnahmelager, nämlich beispielsweise flacheisen- oder U-förmig, denkbar.

Vorliegend sind die Trägerelemente augenschraubenartig ausgebildet, wodurch sich insbesondere deshalb günstige, weil fertigungstechnische Bedingungen ergeben, da jedes Trägerelement in einfacher Art und Weise einerseits mit der zuvor beschriebenen Ausnehmung zur Aufnahme eines Endbereiches der Drehachse eines Wälzkörpers und andererseits mit einem ebenfalls bereits erwähnten Gewindeteil ausgebildet werden kann. Von Vorteil ist, den Gewindeteil des Trägerelements innerhalb eines Gegenstücks des Aufnahmelagers, welches bevorzugt von außen mit dem jeweiligen Käfigseitenelement ortsfest verbunden ist, einstell- und arretierbar festzulegen. Es hat sich gezeigt, dass es deshalb von Vorteil ist, jedes Trägerelement mit einem Gewindeteil auszubilden und dieses innerhalb des Gegenstücks des jeweils zugeordneten Aufnahmelagers festzulegen, weil dem bevorzugt lagerbockartig ausgebildeten Gegenstück in einfachster Weise vom Gewindeteil des Trägerelements getragene kontermutterartige Sicherungsmittel zugeordnet werden können, wodurch sich besonders vorteilhafte Bedingungen sowohl im Rahmen der Einstellung des Parallelabstands der Drehachse jedes Wälzkörpers von der Lagerachse als auch im Zusammenhang mit der ortsfesten Sicherung dieser gewollten Position ergeben. Dies deshalb, da zur Einstellung bzw. Veränderung dieses Parallelabstandes lediglich zumindest eine der Kontermuttern vom Gegenstück gelöst und die andere entsprechend bedient werden muss, während zur Positionssicherung des Parallelabstands die Kontermuttern lediglich gegen das lagerbockartige Gegenstück zu verspannen sind.

Damit auch unter praktischen Einsatzbedingungen eines den erfindungsgemäßen Metallkäfig aufweisenden Wälzlagers eine ausreichende Sicherung gegen Axialverschiebungen der beidseitig von den Trägerelementen der Aufnahmelager aufgenommenen Drehachsen der Wälzkörper gewährleistet ist, sollten sie außerhalb der jeweiligen Trägerelemente angeordnete splintartige Sicherungsmittel derart nahe zu diesen aufnehmen, dass ein selbsttätiges und ungewolltes Axialverschieben der Drehachsen innerhalb der Aufnahmen ausgeschlossen ist.

Um außerdem den Reibungswiderstand zwischen den seitlichen Außenflächen der Wälzkörper und den Innenflächen der Käfigseitenelemente möglichst zu minimieren, wird vorgeschlagen, an diesen Stellen vorzugsweise Unterlegscheiben anzuordnen. Diese könnten unterschiedliche seitliche Ausdehnungen aufweisen, um möglicher Weise hier auftretende und sich gegebenenfalls negativ auswirkenden Toleranzen wirkungsvoll begegnen zu können.

Es hat sich gezeigt, dass es außerordentlich vorteilhaft ist, den erfindungsgemäßen Metallkäfig des Wälzlagers quergeteilt auszubilden, wobei zwei Grundkörperhälften unter normalen Umständen ausreichend erscheinen, um alle Einsatzfälle bedarfsgerecht bedienen zu können.

Nach der bevorzugten Variante sind diese Grundkörperhälften derart ausgebildet, dass sie manschettenartig und - bedingt durch die Abstandsvariabilität der Wälzkörper zur Lagerachse - einstellbar auf einem rohrförmigen Bereich eines eine Rotationsachse aufweisenden Drehkörpers festlegbar sind, wodurch sich die Einsatzmöglichkeiten der erfindungsgemäßen Lösung nochmals wesentlich erweitern, da diese Wälzlager nunmehr offensichtlich zur entsprechenden Drehlagerung, beispielsweise auch kurbelwellenähnlicher technischer Gebilde, geeignet sind.

Die Verbindung der Grundkörperhälften kann dabei grundsätzlich in beliebiger geeigneter Weise gestaltet sein. So kann sie bei besonders einfach gestalteten Varianten keilförmige Arretierelemente aufweisen, welche mittels entsprechend zugeordneter schiefer Ebenen eine Art Verriegelung der Grundkörperhälften untereinander bewirken. Da es aber solchen Lösungen insbesondere an den Möglichkeiten einer exakten Einstellbarkeit, einer leichten Handhabbarkeit und/oder einer einfachen Verbindungsmöglichkeit der Grundkörperhälften miteinander ermangelt, ist nach einer bevorzugten Variante des erfindungsgemäßen Metallkäfigs vorgesehen, Gewindespindeln od. dgl. einzusetzen, die bevorzugt beide Grundkörperhälften insgesamt sowie nach außen gerichtet durchsetzen und dort jeweils eine Schraubverbindung aufweisen. Durch das äußerst einfache Anordnen/Entfernen der Gewindespindeln in/aus die/den Grundkörperhälften und dem günstigen Schaffen bzw. Aufheben des Wirkens der Schraubverbindung können alle zuvor dargestellten vorteilhaften Auswirkungen realisiert werden.

Der Metallkäfig zur Aufnahme von Wälzkörpern in einem Wälzlager weist zwei parallel nebeneinander und koaxial zur Lagerachse angeordnete scheibenförmige Käfigseitenelemente auf, zwischen denen auf mit beiden Käfigseitenelementen in Wirkverbindung stehenden Drehachsen geführte Wälzkörper in Umlaufrichtung regelmäßig voneinander beabstandet aufgenommen und die Käfigseitenelemente mit Durchdringungen zur Aufnahme des Endbereiches der jeweiligen Drehachse versehen sind. Die Käfigseitenelemente sind zumindest abschnittsweise mittels eines äußeren Steges U- oder gabelförmig miteinander verbunden und weisen an ihren Außenflächen parallel zur Lagerachse einstellbare Aufnahmelager für die Drehachsen der Wälzkörper auf. Jeder Endbereich der Drehachse des Wälzkörpers wird von einem außerhalb an den Käfigseitenelementen einstellbar festgelegten Trägerelement des Aufnahmelagers aufgenommen. Jedes Trägerelement weist eine Ausnehmung zur Aufnahme eines Endbereichs der Drehachse auf und ist mit einem Gewindeteil versehen, welches von einem Gegenstück aufgenommen wird. Ein zusätzliches Wälzlager, insbesondere Kugellager, liegt ebenfalls am Drehkörper, insbesondere an einer Welle an. Über einen Stellring ist dieses an die Größe des Drehkörpers anpassbar. Das Wälzlager, insbesondere Kugellager, weist Kugellagerbolzen auf, die in einem Aufnahmekörper gelagert sind. Die Kugellagerbolzen sind in paralleler Richtung zur Drehachse des Drehkörpers durch Langlöcher im Aufnahmekörper verstellbar.

Die vorliegende Erfindung betrifft weiterhin ein Wälzlager mit einem erfindungsgemäßen Metallkäfig.

Weitere bevorzugte Ausgestaltungen der Erfindung ergeben sich aus den Unteransprüchen bzw. der nachstehenden Beschreibung eines bevorzugten Ausführungsbeispiels, welches auf die beigefügten Zeichnungen Bezug nimmt.

Die wesentlichen Vorteile des erfindungsgemäßen Metallkäfigs bestehen insbesondere darin, dass durch diesen die Möglichkeit geschaffen ist, Wälzlager zur Verfügung zu stellen, welche trotz relativ niedriger Fertigungskosten und aufweisender hoher Funktionalität bisher nicht oder nur sehr schwer berücksichtigbaren Durchmesserbereichen von Drehkörpern in einfacher Weise zugeordnet werden können und somit die bedienbaren Einstell- und/oder Lastbereiche für Drehkörper wesentlich erweitern. Dabei sollte das vorgeschlagene Metallkäfigkonzept bevorzugt bei Zylinderrollenlagern, Tonnen- oder Kugelrollenlagern, aber auch z.B. bei Pendelkugellagern oder Pendelrollenlager eingesetzt werden. Auch bei Lagern mit der Möglichkeit, Fluchtungsfehler auszugleichen, kann das vorgeschlagene Metallkäfigkonzept eingesetzt werden.

Ein Ausführungsbeispiel der Erfindung wird im Folgenden unter Bezugnahme auf die beigefügte Zeichnung beschrieben.

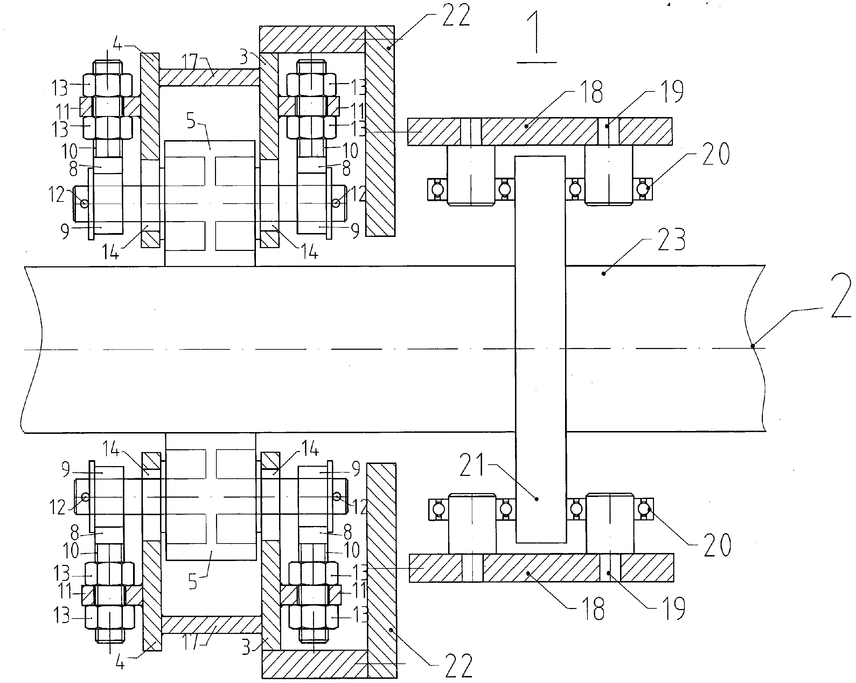

- Fig. 1: Schnitt durch ein erfindungsgemäßes Aufnahmelager

Fig. 1 zeigt einen Metallkäfig 1 mit zwei scheibenförmigen Käfigseitenelementen 3, 4, welche koaxial zur Lagerachse 2 angeordnet sind. Zwischen diesen Käfigseitenelementen 3, 4 sind die auf ihren Drehachsen 6 geführten Wälzkörper 5 in Umlaufrichtung regelmäßig voneinander beabstandet aufgenommen.

Dabei bestimmt der zumindest abschnittsweise die beiden Käfigseitenelemente 3 , 4 U- oder gabelförmig miteinander verbindende äußere Steg 17 den lichten Abstand zwischen den Käfigseitenelementen 3, 4 und beeinflusst somit nicht nur unwesentlich auch die mögliche Breite der eingesetzten Wälzkörper 5. Es versteht sich, dass mit dem Ziel der Reduktion des Reibungswiderstandes zwischen den seitlichen Außenflächen der Wälzkörper 5 und den Innenflächen der Käfigseitenelemente 3, 4 wie in der Zeichnung dargestellte und auf der Drehachse 6 des Wälzkörpers 5 dort angeordnete, aber nicht näher bezeichnete Unterlegscheiben od. dgl. zum Einsatz kommen können. Diese könnten zugleich auch, um hier gegebenenfalls auftretenden und sich negativ auswirkenden Toleranzen zu begegnen, angepasste und damit unterschiedliche seitliche Ausdehnungen aufweisen.

Die beidseitig an den Außenflächen der Käfigseitenelemente 3, 4 festgelegten Aufnahmelager 7 sind in Fig. 1 ebenso erkennbar wie die Durchdringungen 14 in den Käfigseitenelementen 3, 4 für die Drehachsen 6 der Wälzkörper 5. Vorliegend sind die Durchdringungen 14 schlitz- oder langlochartig ausgebildet und derart angeordnet, dass an dieser Stelle eine parallele Einstellbarkeit der Drehachsen 6 der Wälzkörper 5 zur Lagerachse 2 ermöglicht wird. Dazu sind zumindest die Endbereiche jeder Drehachse 6 beidseitig durch diese zugeordneten Durchdringungen 14 hindurchgeführt und außerhalb der Käfigseitenelemente 3, 4 in der entsprechenden Ausnehmung 9 des jeweiligen augenschraubenartig ausgebildeten Trägerelements 8 des Aufnahmelagers 7 aufgenommen.

Um eine technisch einfache, aber trotzdem funktionssichere Lösung für die bereits erwähnte Einstellbarkeit der Drehachsen 6 zu realisieren, ist jedes Trägerelement 8 andererseits mit einem Gewindeteil 10 ausgebildet. Dieses Gewindeteil 10 ist innerhalb einer Bohrung eines Gegenstücks 11, welches mit der Außenfläche der Käfigseitenelemente 3 oder 4 ortsfest verbunden ist, einstell- und arretierbar festgelegt.

Hierzu sind, nach einer bevorzugten Variante des erfindungsgemäßen Wälzlagers 1, dem vorzugsweise lagerbockartig ausgebildeten Gegenstück 11 beidseitig und vom Gewindeteil 10 getragene kontermutterartige Sicherungsmittel 13 zugeordnet, was unter praktischen Bedingungen sowohl durch ein Lösen und Verstellen dieser Sicherungsmittel 13 ein problemloses gewünschtes Einstellen des Parallelabstandes der Drehachsen 6 der Wälzlager 5 zur Lagerachse 2 als auch durch ein Verspannen der Sicherungsmittel 13 auf dem Gewindeteil 10 und gegen das Gegenstück 11 gerichtet ein sicheres Arretieren des jeweiligen Trägerelements 8 in dieser Position möglich macht. Insbesondere die zuletzt dargestellte Thematik ist deshalb für die Realisierung des allgemeinen Erfindungsgedankens von besonderer Bedeutung, weil sie die Möglichkeit des Einsatzes des erfindungsgemäßen Wälzlagers 1 , im Gegensatz zu bekannten Lösungen, im Rahmen auch von bestimmten Außendurchmesserbereichen der Drehkörper 23 ermöglicht.

In der Zeichnung ist weiterhin deutlich erkennbar, dass ein axiales Verschieben der Drehachsen 6 der Wälzkörper 5 zwischen den Trägerelementen 8 durch splintartige Sicherungsmittel 12 sicher unterbunden ist, da diese Sicherungsmittel 12 die Drehachsen 6 derart nahe vor dem jeweiligen Trägerelement 8 mittels einer Bohrung durchdringen, dass Lageverschiebungen so gut wie ausgeschlossen sind. Das Wälzlager 1 mit einem erfindungsgemäßen Metallkäfig soll nunmehr anhand seiner Zuordnung zu einem rohrförmigen Bereich eines eine Rotationsachse aufweisenden Rotationskörpers beispielhaft erläutert werden, wobei davon ausgegangen wird, dass - aus welchen Gründen auch immer - diesem Bereich die Grundkörperhälften 15, 15' getrennt zugeordnet werden. Nach dem Aufsetzen der einen Grundkörperhälfte 15 auf diesen rohrförmigen Bereich des Drehkörpers 23 treten zumindest einige der Wälzkörper 5 mit der äußeren Umfangsfläche des Drehkörpers 23 in Berührungskontakt. Dem folgt die Zuordnung der anderen Grundkörperhälfte 15' und das lösbare Verbinden beider Grundkörperhälften 15, 15' mittels der Gewindespindeln 16 mit der jeweils zugeordneten Schraubverbindung. Danach sind erforderlichenfalls die Wälzkörper 5 derart einzustellen, dass jeder Wälzkörper 5 mit der äußeren Umfangsfläche des Drehkörpers 23 in Berührungskontakt kommt. Dazu sind die kontermutterartigen Sicherungsmittel 13 des Gewindeteils 10 der Trägerelemente 8 zu lösen und durch ein Verdrehen dieser Sicherungsmittel 13 ist der Parallelabstand der Drehachse 6 jedes Wälzkörpers 3 zur Lagerachse 2 einstell- und festlegbar. Dabei erfolgt zuerst eine Parallelverschiebung der einzustellenden Drehachse 6 zur Lagerachse 2, was auch durch die schlitz- oder langlochartigen Durchdringungen 14 in den Käfigseitenelementen 3, 4 ermöglicht wird. Spätestens nach der gewünschten bzw. erforderlichen Positionierung aller Wälzkörper 5 in Bezug auf den Drehkörper 23 bzw. mit der Kontaktaufnahme aller Wälzkörper 5 mit der äußeren Umfangsfläche des Drehkörpers 23 erfolgt das Verspannen der kontermutterartigen Sicherungsmittel 13 gegen das Gegenstück 11 der Aufnahmelager 7 mit der daraus resultierenden Lagesicherung der Wälzkörper 5. Das erfindungsgemäße Wälzlager 1 ist somit einem Drehkörper 23, der einen Außendurchmesser innerhalb eines bedienbaren Durchmesserbereiches aufweisen kann, optimal zugeordnet und einsatzbereit.

Über ein Verbindungselement 22 ist ein weiteres Kugellager 20 angeordnet, welches ebenfalls am Drehkörper, insbesondere einer Welle, anliegt, und zur Aufnahme der Horizontalkraft dient. Das Kugellager 20 ist über einen Stellring 21 an die Größe des Drehkörpers anpassbar. Das Kugellager 20 weist Kugellagerbolzen 19 auf, die in einem Aufnahmekörper 18 gelagert sind, wobei die Kugellagerbolzen 19 in paralleler Richtung zur Drehachse des Drehkörpers durch Langlöcher im Aufnahmekörper 18 verstellbar und beispielsweise über ein Gewinde oder eine Exzenterverstellung auch feststellbar sind.

Eine weitere Möglichkeit zur Umsetzung der Verstellbarkeit der Lager 20 zum korrekten Anliegen an den Verstellring 21 und somit zur sicheren Aufnahme der Horizontalkraft ist durch eine Teilung des Körpers 18 mittig über den Stellring 21 möglich, so dass links und rechts des Stellringes 21 das Kugellager 20 mit Kugellagerbolzen 19 einzeln an den Stellring 21 herangeführt und über entsprechende Verschraubungen als komplettes System an die Seite des Stellrings 21 angelegt werden kann.

Um die Sicherheit der Funktion des Systems zu erhöhen, können alle Maß-, Form- und Lageabweichungen zusätzlich über Messsysteme erfasst werden.

Der Metallkäfig ist in diesem Ausführungsbeispiel in zwei Grundkörperhälften quergeteilt. Diese Grundkörperhälften umschließen dabei den eine Rotationsachse aufweisenden Drehkörper manschettenartig. Die einzelnen Wälzkörper 5 sind entsprechend eingestellt und stehen mit der äußeren Umfangsfläche des Drehkörpers in Wirkkontakt.

Um im Rahmen eines Anwendungsfalls des erfindungsgemäßen Wälzlagers auch eine exakte und hochbelastbare Positionierung der Grundkörperhälften zu erzielen, werden die beiden Grundkörperhälften insgesamt von zumindest zwei Gewindespindeln durchsetzt, denen außerhalb der Grundkörperhälften, aber mit diesen in Wirkverbindung tretend, Schraubenmuttern zugeordnet sind, welche gegebenenfalls auch gekontert ausgebildet sein könnten. In Verbindung mit einer möglichen exakten Positionierung der Wälzkörper 5 an der äußeren Umfangsfläche des Drehkörpers 23 schafft diese Ausbildung der lösbaren Verbindung der Grundkörperhälften optimale Voraussetzungen, das Wälzlager mit seinem erfindungsgemäßen Metallkäfig im Rahmen bestimmter Durchmesserbereiche der Drehkörper einzusetzen.

Es versteht sich, dass der grundsätzliche Erfindungsgedanke nicht an die in diesem Ausführungsbeispiel dargestellten Einzelheiten gebunden ist.

### Bezugszeichenliste

- 1: Wälzlager
- 2: Lagerachse
- 3,4: Käfigseitenelemente
- 5: Wälzkörper
- 6: Drehachse
- 7: Aufnahmelager
- 8: Trägerelement
- 9: Ausnehmung
- 10: Gewindeteil
- 11: Gegenstück
- 12: splintartiges Sicherungsmittel
- 13: kontermutterartiges Sicherungsmittel
- 14: Durchdringung
- 17: Steg
- 18: Körper zur Aufnahme der Kugellagerbolzen
- 19: Kugellagerbolzen
- 20: Kugellager
- 21: Stellring
- 22: Verbindungselement
- 23: Drehkörper (Welle)

## Patentansprüche

1. Metallkäfig zur Aufnahme von Wälzkörpern in einem Wälzlager zur Lagerung eines Drehkörpers (23), aufweisend zwei parallel nebeneinander und koaxial zur Lagerachse angeordnete scheibenförmige Käfigseitenelemente, zwischen denen auf mit beiden Käfigseitenelementen in Wirkverbindung stehenden Drehachsen geführte Wälzkörper in Umlaufrichtung regelmäßig voneinander beabstandet aufgenommen und die Käfigseitenelemente mit Durchdringungen zur Aufnahme des Endbereiches der jeweiligen Drehachse versehen sind, wobei die Käfigseitenelemente (3, 4) zumindest abschnittsweise mittels eines äußeren Steges (17) U- oder gabelförmig miteinander verbunden sind und an ihren Außenflächen parallel zur Lagerachse (2) einstellbare Aufnahmelager für die Drehachsen (6) der Wälzkörper (5) aufweisen und wobei jeder Endbereich der Drehachse (6) des Wälzkörpers (5) von einem außerhalb an den Käfigseitenelementen (3 ,4) einstellbar festgelegten Trägerelement (8) des Aufnahmelagers aufgenommen ist, wobei jedes Trägerelement (8) eine Ausnehmung (9) zur Aufnahme eines Endbereichs der Drehachse (6) aufweist und mit einem Gewindeteil (10) ausgebildet ist, welches in einem Gegenstück (11) aufgenommen ist, **gekennzeichnet durch** ein zusätzliches Wälzlager, insbesondere Kugellager (20), welches ebenfalls am Drehkörper (23), insbesondere einer Welle anliegt und über einen Stellring (21) an die Größe des Drehkörpers (23) anpassbar ist, das Wälzlager, insbesondere Kugellager (20), Kugellagerbolzen (19) aufweist, die in einem Aufnahmekörper (18) gelagert sind, wobei die Kugellagerbolzen (19) in paralleler Richtung zur Drehachse des Drehkörpers (23) durch Langlöcher im Aufnahmekörper (18) verstellbar sind.

2. Metallkäfig nach Anspruch 1, **dadurch gekennzeichnet, dass** die Drehachsen (6) der Wälzkörper (5) die Käfigseitenelemente (3, 4) beidseitig durchdringen und außen in zugeordneten Aufnahmelagern aufgenommen sind

3. Metallkäfig nach wenigstens einem der vorangegangenen Ansprüche, **dadurch gekennzeichnet, dass** die Durchdringungen (14) schlitz- oder langlochartig sowie zur Einstellbarkeit der die Drehachsen (6) aufnehmenden Aufnahmelager geeignet ausgebildet sind.

4. Metallkäfig nach wenigstens einem der vorangegangenen Ansprüche, **dadurch gekennzeichnet, dass** das Trägerelement (8) augenschraubenartig ausgebildet ist, einerseits einen Endbereich der Drehachse (6) aufnimmt und andererseits in einem lagerbockähnlich ausgebildeten und mit dem Käfigseitenelement (3,4) ortsfest verbundenen Gegenstück (11) des Aufnahmelagers einstell- und arretierbar festgelegt ist.

5. Metallkäfig nach wenigstens einem der vorangegangenen Ansprüche, **dadurch gekennzeichnet, dass** die Drehachsen (6) der Wälzkörper (5) splintartige und der Gewindeteil (10) des Trägerelements (8) kontermutterartige Sicherungsmittel (12, 13) aufweisen, wobei die kontermutterartigen Sicherungsmittel (13) des Gewindeteils (10) des Trägerelements (8) dem lagerbockartigen Gegenstück (11) des Aufnahmelagers zugeordnet sind

6. Metallkäfig nach wenigstens einem der vorangegangenen Ansprüche, **dadurch gekennzeichnet, dass** der Metallkäfig quergeteilt ausgebildet ist und mindestens zwei Grundkörperhälften aufweist, die manschettenartig und einstellbar auf einem rohrförmigen Bereich eines eine Rotationsachse aufweisenden Drehkörpers (23) festlegbar sind.

7. Metallkäfig nach wenigstens einem der vorangegangenen Ansprüche, **dadurch gekennzeichnet, dass** die Grundkörperhälften beispielsweise mittels Gewindespindeln (16) miteinander verbindbar ausgebildet sind.

8. Wälzlager (1) für Wälzkörper, vorzugsweise Zylinderrollen, **gekennzeichnet durch** einen Metallkäfig nach einem der vorhergehenden Ansprüche.

## Claims

1. A metal cage for receiving rolling elements in a roller bearing for mounting a rotating body (23), having two disc-shaped cage side elements arranged parallel to one another and coaxially to the bearing axis, between which cage side elements rolling elements guided on axes of rotation in operative connection with both cage side elements are received regularly spaced from one another in the direction of rotation and the cage side elements are provided with penetrations for receiving the end region of the respective axis of rotation, the cage side elements (3, 4) being connected to one another at least in sections by means of an outer web (17) in a U-shape or fork-shape and having adjustable receiving bearings for the axes of rotation (6) of the rolling elements (5) on their outer surfaces parallel to the bearing axis (2) and each end region of the axis of rotation (6) of the rolling element (5) being received by a carrier element (8) of the receiving bearing that is adjustably fixed on the outside of the cage side elements (3, 4), each carrier element (8) having a recess (9) for receiving an end region of the axis of rotation (6) and being formed with a threaded part (10) which is received in a counterpart (11), **characterized by** an additional roller bearing, in particular ball bearing (20), which also rests on the rotating body (23), in particular a shaft and can be adapted to the size of the rotating body (23) via an adjusting ring (21), the roller bearing, in particular ball bearing (20), has ball bearing pins (19) which are mounted in a receiving body (18), wherein the ball bearing pins (19) are adjustable in a direction parallel to the axis of rotation of the rotating body (23) through elongated holes in the receiving body (18).

2. The metal cage according to claim 1, **characterized in that** the axes of rotation (6) of the rolling elements (5) penetrate the cage side elements (3, 4) on both sides and are received on the outside in associated receiving bearings.

3. The metal cage according to at least one of the preceding claims, **characterized in that** the penetrations (14) are slot-like or elongated hole-like in form and are designed to be suitable for the ability to adjust the receiving bearings receiving the axes of rotation (6).

4. The metal cage according to at least one of the preceding claims, **characterized in that** the carrier element (8) is designed like an eye bolt, on the one hand, receives an end region of the axis of rotation (6) and, on the other hand, is fixed adjustable and lockable in a bearing bracket-like design and fixedly connected to the cage side element (3, 4) counterpart (11) of the receiving bearing.

5. The metal cage according to at least one of the preceding claims, **characterized in that** the axes of rotation (6) of the rolling elements (5) have split pin-like securing means (12, 13) and the threaded part (10) of the carrier element (8) has counter-nut-like securing means (12, 13), wherein the counter-nut-like securing means (13) of the threaded part (10) of the carrier element (8) are assigned to the bearing bracket-like counterpart (11) of the receiving bearing.

6. The metal cage according to at least one of the preceding claims, **characterized in that** the metal cage is designed to be transversely divided and has at least two base body halves which can be fixed in a sleeve-like and adjustable manner on a tubular region of a rotating body (23) having a rotational axis.

7. The metal cage according to at least one of the preceding claims, **characterized in that** the base body halves are designed such that they can be connected to one another, for example, by means of threaded spindles (16).

8. A roller bearing (1) for rolling elements, preferably cylindrical rollers, **characterized by** a metal cage according to any one of the preceding claims.

## Revendications

1. Cage métallique destinée au logement de corps roulants dans un roulement permettant le logement d'un corps rotatif (23), présentant deux éléments latéraux de cage en forme de disques disposés de manière parallèle l'un à côté de l'autre et de manière coaxiale par rapport à l'axe de roulement, entre lesquels sont reçus des corps roulants entraînés dans la direction circonférentielle espacés de manière régulière l'un de l'autre sur des axes de rotation étant en connexion fonctionnelle avec les deux éléments latéraux de cage et les éléments latéraux de cage sont munis de passages traversants pour la réception de la zone d'extrémité de l'axe de rotation respectif, où les éléments latéraux de cage (3, 4) sont reliés au moins par endroits au moyen d'une tige extérieure (17) en forme de U ou en forme de fourche et présentent au niveau de leurs surfaces extérieures, parallèlement à l'axe de roulement (2), des roulements de réception réglables pour les axes de rotation (6) des corps de roulement (5) et où chaque zone d'extrémité de l'axe de rotation (6) du corps roulant (5) est reçue par un élément support (8) du roulement de réception fixé de manière réglable à l'extérieur sur les éléments latéraux de cage (3 ,4), où chaque élément support (8) présente une cavité (9) permettant la réception d'une zone d'extrémité de l'axe de rotation (6) et est conçu avec une partie filetée (10), laquelle est réceptionnée dans une pièce complémentaire (11), **caractérisée par** un roulement supplémentaire, en particulier un roulement à billes (20), lequel est adjacent également au corps roulant (23), en particulier à un arbre et peut s'ajuster à la taille du corps roulant (23) par le biais d'une bague de réglage (21), le roulement, en particulier, le roulement à billes (20), présente des boulons de roulement à billes (19) qui sont logés dans un corps de réception (18), où les boulons de roulement à billes (19) sont réglables dans la direction parallèle à l'axe de rotation du corps roulant (23) par des trous oblongs dans le corps de réception (18).

2. Cage métallique selon la revendication 1, **caractérisée en ce que** les axes de rotation (6) des corps roulants (5) traversent les éléments latéraux de cage (3, 4) des deux côtés et sont reçus dans des roulements de réception associés à l'extérieur.

3. Cage métallique selon au moins l'une des revendications précédentes, **caractérisée en ce que** les passages traversants (14) sont conçus en forme de fentes ou de trous oblongs ainsi qu'appropriés pour un réglage des roulements de réception recevant les axes de rotation (6).

4. Cage métallique selon au moins l'une des revendications précédentes, **caractérisée en ce que** l'élément support (8) est conçu sous forme d'un boulon à œil, réceptionne d'une part une zone d'extrémité de l'axe de rotation (6) et est conçu réglable et verrouillable d'autre part dans une pièce complémentaire (11) du roulement de réception conçue de manière similaire à un support de roulement et reliée de manière fixe avec l'élément latéral de cage (3, 4).

5. Cage métallique selon au moins l'une des revendications précédentes, **caractérisée en ce que** les axes de rotation (6) des corps roulants (5) présentent des moyens de verrouillage (12, 13) de type goupille fendue et le partie de filetage (10) de l'élément support (8) présente des moyens de verrouillage de type contre-écrou, où les moyens de verrouillage de type contre-écrou (13) de la partie de filetage (10) de l'élément support (8) sont associés à la pièce complémentaire (11) similaire à un support de roulement du roulement de réception.

6. Cage métallique selon au moins l'une des revendications précédentes, **caractérisée en ce que** la cage métallique est conçue subdivisée de manière transversale et présente au moins deux moitiés de corps de base, qui peuvent être définis comme des manchettes et réglables sur une zone en forme de tube d'un corps roulant (23) présentant un axe de rotation.

7. Cage métallique selon au moins l'une des revendications précédentes, **caractérisée en ce que** les moitiés de corps de base sont conçues pour être reliées ensemble, par exemple, au moyen de broches de filetage (16).

8. Roulement (1) pour corps roulants, de préférence, des rouleaux de cylindre, **caractérisé par** une cage métallique selon l'une des revendications précédentes.
